# EUROPÄISCHE PATENTSCHRIFT

(11) **EP 0 958 792 B1**
(45) Veröffentlichungstag und Bekanntmachung des Hinweises auf die Patenterteilung: **08.01.2003**
(21) Anmeldenummer: 99115976.5
(22) Anmeldetag: 26.09.1997
(51) Int. Cl.: A61C 3/025

(54) **Medizinisches oder dentales Handinstrument**
Medical or dental handpiece
Outil manuel médical ou dentaire

(30) Priorität: 27.09.1996 DE 19639871
(43) Veröffentlichungstag der Anmeldung: 24.11.1999
(62) Teilanmeldung aus: 97116813.3
(73) Patentinhaber: KALTENBACH & VOIGT GmbH & Co., 88400 Biberach/Riss (DE)
(72) Erfinder: Gugel, Bernd, 89079 Ulm-Einsingen (DE); Heckenberger, Hans, 88400 Biberach (DE); Mohn, Uwe, 89601 Schelklingen (DE); Wiek, Hans-Dieter, 88454 Hochdorf-Schweinhausen (DE)
(74) Vertreter: Schmidt-Evers, Jürgen, Dipl.-Ing.

(56) Entgegenhaltungen:
- EP-A- 0 035 040
- EP-A- 0 154 900
- US-A- 4 950 160

## Beschreibung

Die Erfindung bezieht sich auf ein medizinisches oder dentales Handinstrument nach dem Oberbegriff des Anspruchs 1.

Ein Handinstrument dieser Arten ist jeweils in den Druckschriften US 2 814 877, IT 1180538 und US 4 648 840 beschrieben.

Diesen bekannten Handinstrumenten ist ein stabförmiges Handstück gemeinsam, das in seinem vorderen Endbereich eine Austrittsdüse für ein Behandlungsmittel und an seinem hinteren Ende einen Kupplungsanschluß für ein lösbares Ankuppeln des Handstücks an eine flexible Versorgungsleitung aufweist. Vom Kupplungsanschluß erstrecken sich durch das Handstück eine oder mehrere Zuführungsleitungen für das Behandlungsmittel zur Austrittsdüse.

Das in der US 2 814 877 beschriebene Handstück weist an seinem hinteren Ende einen Vorratsbehälter für das Behandlungsmittel auf. Der Kupplungsanschluß für die Versorgungsleitung ist am hinteren Ende des Vorratsbehälters angeordnet, wobei die Zuführungsleitung sich koaxial durch den Behälter erstreckt. Das Handstück ist ein aus mehreren Längsabschnitten fest zusammengesetzter Körper. Im vorderen Endbereich des Handstücks ist ein Ventil in der Zuführungsleitung angeordnet, das durch ein quer abstehendes Betätigungselement manuell wahlweise zu öffnen oder zu schließen ist. Die Austrittsöffnung befindet sich am vorderen Ende einer vom Handstück vorragenden Kanüle, deren freies Ende bezüglich der Längsmittelachse des Handinstruments schräg nach vorne verläuft.

Ein mit dem vorbeschriebenen bekannten Handinstrument etwa vergleichbares bekanntes Handinstrument ist in der IT 1180538 beschrieben. Dieses Handinstrument weist in seinem hinteren Endbereich ebenfalls eine Vorratskammer für das Behandlungsmittel auf, wobei in der vorderen Hälfte des Handstücks eine erste und eine zweite Wirbelkammer für das Behandlungsmittel angeordnet sind.

Ein in der US 4 648 840 beschriebenes dentales Handinstrument weist im Unterschied zu den vorbeschriebenen Bauweisen einen seitlich abstehenden Vorratsbehälter auf, der im hinteren Endbereich des Handinstruments angeordnet ist.

Ein vorliegendes Handinstrument hat u.a. zwei Forderungen zu erfüllen. Zum einen soll es handhabungsfreundlich sein, um mit möglichst wenig Kraftanstrengung das Handinstrument bei seinem Gebrauch gezielt und sicher bewegen und führen zu können. Zum anderen ist eine einfache und kostengünstig herstellbare Bauweise angezeigt, die insbesondere unter Berücksichtigung des zur Verfügung stehenden verhältnismäßig geringen Bauraums von wesentlicher Bedeutung ist. Dabei ist zu berücksichtigen, daß die Zuführungsleitung zwischen dem der Versorgungsleitung zugehörigen Kupplungsteil und dem dem Handinstrument zugehörigen Kupplungsteil sowie der weiterführenden Zuführungsleitung kompliziert ist und zur Herstellung dieser Zuführungsleitungsabschnitte ein verhältnismäßig großer Herstellungs- und Zeitaufwand erforderlich ist, wodurch auch hohe Herstellungskosten vorgegeben sind.

Dokument EP-A-0 035 040 offenbart ein dentales Handinstrument zum Abstrahlen eines abrasiven Behandlungsmittels, mit einem Handstück, einem Vorratbehälter für das abrasive Behandlungsmittel, einem Kupplungsanschluß für ein Transportfluid, und einer drehbaren und lösbaren Kanüle, die eine Auslaßöffnung für das abrasive Behandlungsmittel und das Transportfluid aufweist. Diese Kanüle weist ein Griffteil auf, das eine Anpassung der Position der Kanüle ermöglicht (EP - A - 0 035 040, Seite 7, Zeilen 15-17).

Der Erfindung liegt die Aufgabe zugrunde, ein medizinisches oder dentales Handinstrument der im Oberbegriff des Anspruchs 1 angegebenen Art so auszugestalten, daß eine einfachere und bessere Handhabung möglich ist.

Diese Aufgabe wird durch die Merkmale des Anspruchs 1 gelöst.

Bei dieser erfindungsgemäßen Ausgestaltung läßt sich das Griffteil mit einer gegebenenfalls vorhandenen Kanüle unabhängig vom dahinter angeordneten Schaft leicht und handhabungsfreundlich drehen und die Austrittsöffnung in wahlweise Stellungen bringen. Hierdurch wird eine gezielte Behandlung der Zähne eines Kiefers oder des Unter- und Oberkiefers wesentlich erleichtert.

Es ist außerdem vorteilhaft, den Kupplungsanschluß seitlich am Handinstrument anzuordnen. Hierdurch kann die wirksame Hebelbelastung, die die flexible Versorgungsleitung bei der Handhabung des Handinstruments auf letzteres ausübt, wesentlich reduziert werden. Dies ist dadurch zu erklären, daß zum einen aufgrund des seitlichen Kupplungsanschlusses der wirksame Belastungsschwerpunkt der flexiblen Versorgungsleitung zum Handinstrument hin verlagert wird. Zum anderen läßt sich der Wirkabstand, den die Anschlußkupplung vom Griffteil aufweist, wesentlich verringern, so daß auch dadurch das Stabilisierungsmoment, das die Bedingungshand bei der Handhabung des Handinstruments aufbringen muß, wesentlich reduziert ist. Die vorteilhafte Folge davon ist, daß die Behandlungsperson das Handinstrument einfacher, leichter und mit geringerer Aufmerksamkeit bewegen und führen kann. Infolgedessen kann die Behandlungsperson sich vermehrt der eigentlichen Behandlung widmen, so daß auch eine Verbesserung der Qualität der Behandlung erreichbar ist.

Die an Körperteilen, insbesondere Zähnen, vorhandenen Beläge oder Verfärbungen können unterschiedlicher Art und Festigkeit sein.

Der Erfindung liegt deshalb im weiteren die Aufgabe zugrunde, ein Handinstrument so auszugestalten, daß das betreffende Körperteil gezielt behandelt werden kann und/oder das Handinstrument an die jeweils erforderliche Behandlung anpaßbar ist.

Erfindungsgemäß können mehrere Behandlungsmittel unterschiedlicher Abtragsfähigkeit wahlweise benutzt werden. Hierdurch lassen sich unterschiedliche Beläge und/oder Verfärbungen durch ein Behandlungsmittel größerer oder geringerer Abtragsfähigkeit zum einen leistungsgerecht und zum anderen schonend und somit gezielt behandeln, z.B. mit einem Behandlungsmittel feiner, mittlerer oder grober Abtragsfähigkeit. Dabei ist zu berücksichtigen, daß insbesondere bei der Behandlung mit einem Behandlungsmittel grober Wirksmkeit je nach Aggressivität des Behandlungsmittels mit einem geringen Abtrag von Zahnsubstanz gerechnet werden kann. Dies läßt sich durch die Erfindung vermeiden oder auf ein Minimum reduzieren.

Weiterbildungen dieser Erfindungsmerkmale ermöglichen eine einfache und handhabungsfreundliche Anpassung des Behandlungsinstruments an unterschiedliche Behandlungsmittel, wobei auch die Auswahl zur Durchführung der Anpassung vereinfacht und erleichtert wird.

Der Erfindung liegt im weiteren die Aufgabe zugrunde, den Innenraum des Handstücks vor Verunreinigung zu schützen.

Erfindungsgemäß wird im Funktionsbetrieb der Innenraum des Handstücks unter Überdruck gesetzt, der ein Eindringen von Verunreinigungen und Krankheitserregern durch Spalten und Fungen verhindert.

Der Erfindung liegt im weiteren die Aufgabe zugrunde, ein Handinstrument so auszugestalten, daß eine Verunreinigung der Kupplung verhindert ist.

Bei dieser Ausgestaltung erfolgt eine selbsttätige Schließung der Zuführungsleitung zur Kupplung hin. Hierdurch werden bei einer Verstopfung des Handinstruments Druckentlastungsgeräusche und Verunreinigungen beim Öffnen der Kupplung vermieden.

Der Erfindung liegt im weiteren die Aufgabe zugrunde, ein Handinstrument so auszugestalten, daß unabhängig von der Stellung des Handinstruments ein im wesentlichen gleichmäßiges Gemisch aus dem Trägerfluid und dem abrasiven Behandlungsmittel erreicht wird.

Bei dieser Ausgestaltung befindet sich die Einlaßöffnung für das Transportfluid und die innere Auslaßöffnung für das Gemisch im mittleren Bereich der Aufnahmekammer des Vorratsbehälters. Hierdurch befinden sich diese Öffnungen in einer Zone der Aufnahmekammer, in der unabhängig von der Stellung des Handinstruments eine im wesentlichen gleichmäßige Gemischmenge und -konzentration durch die innere Auslaßöffnung ausströmen können. Dies ist von wesentlichem Vorteil, da das Handinstrument bei der Behandlung insbesondere im Mundraum eines Patienten in unterschiedlichen Stellungen gehalten werden kann und trotzdem ein im wesentlichen konstantes Gemisch aus der Auslaßöffnung am Griffteil austritt.

Die Erfindung bezieht sich im übrigen auch auf eine vorteilhafte Druckentlastungsvorrichtung für den Vorratsbehälter, die ein sauberes Öffnen des Vorratsbehälters auch dann ermöglicht, wenn dieser unter Druck steht, z.B. beim Vorhandensein einer Verstopfung im Bereich des Handinstruments.

Nachfolgend werden die Erfindung und weitere durch sie erzielbare Vorteile anhand von vereinfachten Zeichnungen und vorteilhaften Ausführungsbeispielen näher erläutert. Es zeigt:
- Fig. 1: ein erfindungsgemäßes medizinisches oder insbesondere zahnärztliches Handinstrument im vertikalen Längsschnitt;
- Fig. 2: eine Kanüle des Handinstruments im vertikalen Längsschnitt;
- Fig. 3: den Schnitt III-III in Fig. 1;
- Fig. 4: die in Fig. 1 mit X gekennzeichnete Einzelheit in der Draufsicht.

Die Hauptteile des Handinstruments 1 sind ein stabförmiges Handstück 2, ein Vorratsbehälter 3 für ein pulverförmiges abrasives Behandlungsmittel, der im hinteren Bereich des Handinstruments 1 angeordnet ist, ein Kupplungsanschluß 4 zum lösbaren Ankuppeln des Handinstruments 1 an eine flexible Versorgungsleitung eines Behandlungsstuhls oder dergleichen, eine Auslaßöffnung 5 im vorderen Endbereich des Handinstruments 1 und Zuführungsleitungen, die sich vom Kupplungsanschluß 4 durch das Handinstrument 1 bis zur Auslaßöffnung 5 erstrecken.

Bei der vorliegenden bevorzugten Ausgestaltung besteht das Handstück 2 aus einem vorderen Handstückteil, das ein Griffteil 6 bildet, und einem hinteren Handstückteil, das einen sich vom Griffteil 6 nach hinten erstreckenden Schaft 7 bildet, der an seinem hinteren Ende den Vorratsbehälter 3 trägt, und an dem der Kupplungsanschluß 4 in seitlicher Position angeordnet ist.

Das Griffteil 6 und der Schaft 7 sind hülsenförmige Körper, in deren Hohlraum 8 vorzugsweise runden Querschnitts eine oder mehrere Zuführungsleitungen sich zur Auslaßöffnung 5 hin erstrecken, die vom Kupplungsanschluß 4 ausgehen.

Bei der vorliegenden Ausgestaltung sind zwei Zuführungsleitungen 9, 11 vorhanden, nämlich eine für ein Druckgas, insbesondere Druckluft, und eine für eine Behandlungsflüssigkeit, insbesondere Wasser. Die im Bereich des seitlichen Kupplungsanschlusses 4 verlaufenden Zuführungsleitungsabschnitte 9a, 11a münden im hinteren Endbereich und bezüglich des Vorratsbehälters 3 an einer nach vorne versetzten Leitungsverbindung 9c, 11c in weiterführende Leitungsabschnitte bzw. hier in den Hohlraum 8. Dabei erstrecken sich die Zuführungsleitungsabschnitte 9a, 11a vorzugsweise schräg und zwar nach vorne konvergent in eine Hülsenverdickung hinein, an der ein Anschlußstutzen 12 angeformt ist, insbesondere in der vorgegebenen Schräglage, die mit der Längsmittelachse 10 des Handstücks 2 einen spitzen Winkel W, hier von etwa 40 bis 60°, insbesondere etwa 45° bis 55°, einschließt.

Das Handinstrument 1 dient dazu, beispielsweise Beläge, insbesonde an Zähnen, mittels eines an der Düse oder Auslaßöffnung 5 unter Druck ausströmenden, pulverförmige Partikel enthaltenden Stromes zu reinigen, was noch beschrieben wird. Wenn als abrasives Mittel im Strom kleine harte Körner, z.B. Schleifkörner oder Corund-Körner verwendet werden, eignet sich das Handinstrument auch zum Abtragen härteren Gewebes wie Zahnschmelz, z.B. zum Abrunden von scharfen Kanten oder Höhenanpassungen. Dabei können je nach Härte der Körner auch Füllmaterialien oder Metalle von Kronen oder Inlays spanabhebend bearbeitet werden.

Der Kupplungsanschluß 4 ist Teil einer Schraubkupplung oder vorzugsweise Steck/Drehkupplung 13, mit der der Kupplungsanschluß 4 an die nicht dargestellte flexible Versorgungsleitung handhabungsfreundlich und schnell lösbar ankuppelbar ist. Die Steck/Drehkupplung 13 umfaßt einen zylindrischen Kupplungszapfen und eine ihn aufnehmende zylindrische Kupplungsausnehmung 14, wobei bei der vorliegenden Ausgestaltung der andeutungsweise dargesteellte Kupplungszapfen von einem Anschlußteil der flexiblen Versorgungsleitung vorragt und die Kupplungsausnehmung 14 im Anschlußstutzen 12 angeordnet ist.

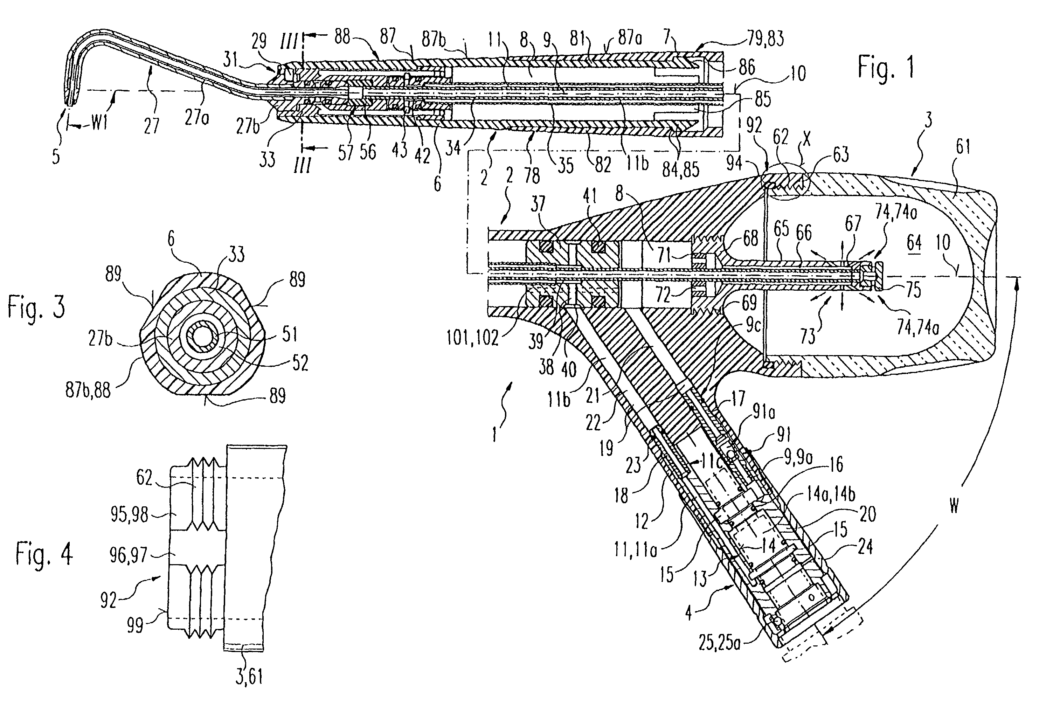

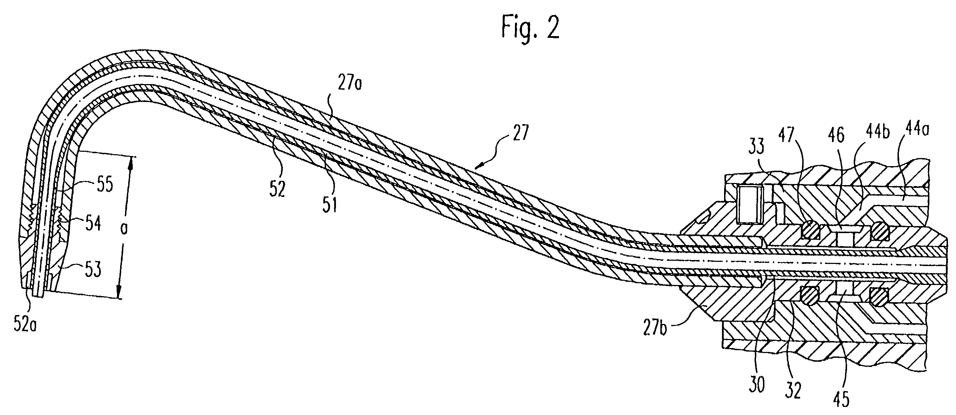

Die in der flexiblen Versorgungsleitung verlaufenden Medienleitungen, hier Wasser und Luft, erstrecken sich als achsparallele Kanäle bis in den Bereich des Kupplungszapfens, 14a, wobei sie die hohlzylindrische Teilungsfuge zwischen dem Kupplungszapfen 14a und der Kupplungsausnehmung 14b an Durchdringungsstellen Z-förmig durchsetzen. An jeder Durchdringungsstelle ist eine Ringnut 15 entweder in der Mantelfläche des Kupplungszapfens 14a oder in der Innenfläche der Kupplungsausnehmung 14b angeordnet, wobei zu beiden Seiten der Durchdringungsstelle jeweils ein Dichtungsring 16 jeweils in der Ringnut des Kupplungszapfens 14a oder der Kupplungsausnehmung 14b zur Abdichtung sitzt. Der Kupplungszapfen 14a und die Kupplungsausnehmung 14b können stufenförmig nach vorne konvergent abgestuft sein, wie es Fig. 1 zeigt, wobei die Leitungsverbindungsstellen axial versetzt in jeder Stufe vorhanden sein können.

Bei der vorliegenden Ausgestaltung ist die Kupplungsausnehmung 14b in einem zylindrischen Einsatzstück 17 angeordnet, das an seinem vorderen Ende z.B. diametral gegenüberliegend zwei vorragende Rohrstutzen 17, 18 aufweist, durch die sich die Zuführungsleitungsabschnitte 9a, 11a erstrecken, und die in eine passende Steckausnehmung 19 einsteckbar sind, von der sich die Rohrstutzen 17, 18 aufnehmende Kanäle 21, 22 erstrecken. Zur Abdichtung können jeweils in Ringnuten der Mantelfläche der Rohrstutzen 17, 18 oder in der Innenfläche der Kanäle 21, 22 angeordnete Ringdichtungen 23 vorgesehen sein. Das Einsatzteil 20 ist durch eine auf den Anschlußstutzen 12 lösbar aufgeschraubte Überwurfmutter 24 gehalten.

Zur lösbaren Sicherung der Steck/Drehkupplung 13 ist eine Verrastungsvorrichtung 25 mit einem federnden Verrastungselement 25a vorgesehen, das in eine Verrastungsausnehmung entweder im Kupplungszapfen 14a oder in der Kupplungsausnehmung 14b federnd einrastbar und zur Lösung der Steck/Drehkupplung 13 überdrückbar ist.

Bei der vorliegenden Ausgestaltung ist die Auslaßöffnung 5 am freien Ende einer sich gerade oder seitlich schräg oder quer erstreckenden Kanüle 27 angeordnet, deren freies Ende mit der Längsmittelachse 10 des Handinstruments 1 einen rechten oder stumpfen Winkel W 1 einschließt. Die Kanüle 27 ist durch ein Außenrohr 27a gebildet, dessen hinteres Ende fest mit einem hohlzylindrischen Kanülenfuß 27b verbunden ist, der durch eine Schnellschlußverbindung, hier ein Bajonettverschluß 31, mit dem vorderen Ende der Griffhülse 6 lösbar verbindbar ist. Der Bajonettverschluß 31 weist in an sich bekannter Weise einen Verschlußzapfen, hier in Form eines radialen Stiftes 29 am Kanülenfuß 24b auf, der durch Einstecken und Drehen der Kanüle 27 in einer Bajonettnut der Griffhülse 6 einführbar und vorzugsweise auch in eine Verrastungsausnehmung verrastbar ist, so daß ein ungewolltes Rückdrehen verhindert ist.

Bei der vorliegenden Ausgestaltung ist eine den Kanülenfuß 27b aufnehmende zylindrische oder stufenzylindrische Steckausnehmung 32 in einer Aufnahmehülse 33 angeordnet, die fest im hülsenförmigen Griffteil 6 angeordnet ist, z.B. durch Pressen oder Kleben. In der Aufnahmehülse 33 sind in einer rückseitigen Stufenbohrung ein Innenrohr 34 und ein Außenrohr 35 fest und dicht angesetzt, von denen sich das Innenrohr 34 koaxial bis in den mittleren Bereich des Aufnahmeraums 36 des Vorratsbehälters 3 erstreckt. Das Außenrohr 35, das das Innenrohr 34 mit einem Ringabstand umgibt, erstreckt sich bis zu einem zylindrischen Verbindungsteil 37, in dem eine Leitungsverbindung zwischen dem Leitungsabschnitt 9b und dem einen weiterführenden Leitungsabschnitt 11b bildenden Ringkanal zwischen dem Innen- und Außenrohr 35 verwirklicht ist. Das Verbindungsstück ist an die Querschnittsgröße des Hohlraums 8 angepaßt und gegen eine axiale Verschiebung darin durch geeignete Befestigungsmaßnahmen gesichert, z.B. durch Kleben oder einen Sicherungsquerstift oder eine Sicherungsquerschraube. An der Mündungsstelle des Leitungsabschnitts 11a ist im Verbindungsstück 37 ein radiales Verbindungsloch 38 angeordnet, das sich nach innen in ein vorderseitiges Stufenloch 39 erstreckt, in das hinein sich das hintere Ende des Außenrohrs 35 erstreckt und abgedichtet ist, z.B. durch Einpressen. Vorzugsweise ist in der Querebene des Verbindungslochs 38 eine Ringnut 40 in der Mantelfläche des Verbindungsstücks 37 vorgesehen, und es können auch mehrere Verbindungslöcher 38 auf den Umfang verteilt angeordnet sein. Zu beiden Seiten des Verbindungslochs 38 ist das Verbindungsstück 37 im Hohlraum 8 durch jeweils einen Dichtungsring 41 abgedichtet, der in einer zugehörigen Ringnut in der Mantelfläche des Verbindungsstücks 37 oder in der Innenfläche des Hohlraums 8 sitzt. Die axiale Sicherung des Verbindungsstücks 37 kann auch dadurch erfolgen, daß es mittels des Außenrohrs 35 axial unverschieblich an der Aufnahmehülse 33 gehalten ist.

Im Bereich der Aufnahmehülse 33 umgeht die Zuführungsleitung 11 das freie Ende des Kanülenfußes 27b. Dies erfolgt dadurch, daß von einem das Außenrohr 35 aufnehmenden hinteren Stufenloch 42 in der Aufnahmehülse 33 ein oder mehrere auf den Umfang verteilt angeordnete radiale Kanäle 43 ausgehen, der oder die in einen etwa achsparallel in der Aufnahmehülse 33 angeordnetes Längskanal 44a münden, der sich bis zum Kanülenfuß 27b erstreckt und durch einen Querkanal 44b in der Aufnahmehülse 33 und einen damit verbundenen Querkanal 45 im Kanülenfuß 27b mit dem Hohlraum des Außenrohrs 27a verbunden ist. Auch hier können mehrere Querlöcher 45 oder auch eine zugehörige Ringnut 46 in der Mantelfläche des Kanülenfußes 27b oder in der Innenfläche der Steckausnehmung 32 angeordnet sein, wobei zu beiden Seiten Ringdichtungen 47 angeordnet sind, die in Ringnuten im Kanülenfuß 47b oder in der Aufnahmehülse 33 sitzen.

Im Außenrohr 27a der Kanüle 27 befindet sich ein Innenrohr 51, dessen Außenquerschnittsgröße kleiner bemessen ist als die Innenquerschnittsgröße des Außenrohrs 27a, so daß sich zwischen letzterem und dem Innenrohr 51 ein Spalt 52 befindet. Wenn sich das Innenrohr 51 koaxial im Außenrohr 27a erstreckt, ist dieser Spalt 52 ein Ringspalt. Dies ist jedoch nicht erforderlich, denn das Innenrohr 51 kann einseitig am Außenrohr 27a anliegen. Das Innenrohr 51 erstreckt sich bis in den freien Endbereich des Außenrohrs 27a, wobei es mit letzterem abschließen kann, zurückstehen kann oder etwas vorstehen kann, wie es dargestellt ist. Bei der vorliegenden Ausgestaltung ist der freie Endbereich des Innenrohrs 51 in einer vorzugsweise konvergenten Kappe 53 gehalten, die mit dem zugewandten Ende des Außenrohrs 27a verschraubt ist, insbesondere mit einem Gewindeansatz 54 eingeschraubt ist.

Die Kappe 53 umgibt das Innenrohr 51 mit einem mit dem kleinen Spalt 52 vergleichbaren Abstand. Zwecks Vergleichsmäßigung der Ausströmung ist es vorteilhaft, am freien Ende des Spalts 52 eine Spaltvergrößerung 52a auszubilden.

Es ist von Vorteil, die Querschnittsgröße des Gewinderohrs 51 ein einem Abstand a vor seinem freien Ende zu verjüngen. Hierdurch werden der Querschnitt des Innenrohrs 51 verringert und die Strömungs- und Austrittsgeschwindigkeit des durchströmenden Mediums, hier Wasser, vergrößert, was zur Leistungsfähigkeit der abrasiven Behandlung beiträgt und außerdem die Vermischung der Medien mit dem abrasiven Mittel verbessert. Die Querschnittsverjüngung 55 soll vorzugsweise nicht stufig sondern allmählich bzw. konisch erfolgen, um eine zur Verstopfung neigende Kante zu vermeiden. Im übrigen Bereich des Innenrohrs 51 ist sein Innenquerschnitt etwas größer bemessen, wodurch die Verstopfungsgefahr verringert wird. Bei der vorliegenden Ausgestaltung beträgt der Abstand a etwa 5 bis 10 mm.

Der Spalt 52 setzt sich im Bereich des Kanülenfußes 27b bis hinter das Querloch 45 fort, wobei ein das Außenrohr 27a aufnehmendes Längsloch 30 gegebenenfalls stufig entsprechend groß bemessen ist. Das hintere Ende des Innenrohrs 51 ist dicht mit dem hinteren Ende des Kanülenfußes 27b verbunden, z.B. eingepreßt oder gelötet, wenn der Kanülenfuß 27b und das Innenrohr 51 aus Metall bestehen. Bei der vorliegenden Ausgestaltung ist das hintere Ende des Innenrohrs 51 in seinem Endbereich etwas verdickt und in das Längsloch 30 oder in eine Stufenvergrößerung desselben eingepreßt, wobei Dichtheit gewahrt ist.

Zur Abdichtung des hinteren Endes des Kanülenfußes 27b und des vorderen Endes des Innenrohrs 34 ist ein vorzugsweise hülsenförmiger Dichtungsring 56 vorgesehen, der im Grund der Steckausnehmung 32 sitzt, wobei vorzugsweise das vordere Ende des Innenrohrs 34 in das Loch des Dichtungsringes 56 hineinragt, das an den Außenquerschnitt des Innenrohrs 34 angepaßt ist. Die Länge des Dichtungsringes 56 ist etwas größer bemessen, als der Abstand zwischen den Innenrohren 34 und 51 oder zwischen dem Innenrohr 34 und dem Kanülenfuß 27b. Infolgedessen wird der Dichtungsring 56 beim Anmontieren der Kanüle 27, hier mit dem Bajonettverschluß, axial komprimiert, wodurch die Abdichtung dieser allgemein mit 57 bezeichneten Dichtungsvorrichtung gewährleistet ist. Der Dichtungsring 56 besteht deshalb aus elastisch zusammendrückbarem Material, wie z.B. Gummi oder Kunststoff.

Der Vorratsbehälter 3 bildet das hintere Ende des Handinstruments 1, wobei er koaxial zum Handstück 2 angeordnet ist und einen hutförmigen Deckel 61 aufweist, der durch ein in seinem freien Randbereich angeordnetes Schraubgewinde 62 mit einer flachen oder ringförmigen Behälterbasis 63 verschraubbar ist. Vorzugsweise ist die Behälterbasis 63 topfförmig ausgebildet, wodurch der Aufnahmeraum 64 des Vorratsbehälters 3 vergrößert ist. Der Deckel 61 besteht vorzugsweise aus transparentem Material, z.B. Glas, Quarz oder Kunststoff.

Das Innenrohr 34 durchsetzt das Verbindungsstück 37 im Stufenloch 39, wobei es im hinteren Abschnitt des Stufenlochs 39 dicht aufgenommen ist. Der hinter dem Verbindungsstück 37 befindliche Teil des Hohlraums 8 ist zum Aufnahmeraum 64 hin durch eine Hülse 65 verschlossen, die das Innenrohr 34 mit einem Ringspalt 66 umgibt, wobei das Innenrohr 34 sich bis zu einer oder in eine Innenschulter 67 im hinteren Endbereich der Hülse 65 erstreckt. Der Ringspalt 66 stellt eine nach hinten gerichtete Verlängerung des Hohlraums 8 dar. Die Hülse 65 ist in das durch den Hohlraum 8 gebildete Loch dicht eingesetzt oder eingeschraubt. Bei der vorliegenden Ausgestaltung ist die Hülse 65 in ihrem Querschnitt kleiner bemessen als der Querschnitt des Hohlraums 8, und sie weist einen Flansch 68 mit einem Außengewinde 69 auf, der in ein Innengewinde des Hohlraums 8 eingeschraubt ist. Der Flansch 68 selbst oder ein darin eingesetzter Stützring 71 hält den hinteren Endbereich des Innenrohrs 37 in axialer Position. Der Stützring 71 weist eine längsgerichtete Perforation oder Durchgangslöcher 72 auf, um den Durchgang der Luft in den Ringspalt 66 zu gewährleisten. In der Hülse 65 befinden sich in einer bezüglich des Aufnahmeraums 64 vorzugsweisen mittleren Position eine Mehrzahl Querlöcher 73, die den Ringspalt 66 mit dem Aufnahmeraum 64 verbinden. Es sind in der Längsrichtung der Mittelachse 10 mehrere, hier jeweils drei Querlöcher 73 vorgesehen, von denen sich der oder ein mittlerer, etwa radial und der oder ein vorderer und der oder ein hinterer nach außen divergent schräg erstrecken. Die Querlöcher 73 können auch auf dem Umfang verteilt angeordnet sein.

An ihrem etwa im mittleren Bereich des Aufnahmeraums 64 positionierten freien Ende weist die Hülse 65 wenigstens ein axiales Eintrittsloch 74 auf, das koaxial mit dem freien Innenquerschnitt des Innenrohrs 34 angeordnet ist. Bei der vorliegenden Ausgestaltung ist dem Eintrittsloch 74 eine Scheibe 75 vorgeordnet, die radiale Zugangslöcher 74a bildet. Bei der vorliegenden Ausgestaltung ist die Scheibe Teil einer Mutter, die eine entsprechende Ausnehmung mit Gewinde am hinteren Ende der Hülse 65 eingeschraubt ist.

Das Griffteil 6 und der Schaft 7 sind in einem Drehlager 78 um die Längsmittelachse 10 relativ zueinander drehbar aneinander gelagert, wobei sie gleichzeitig durch eine Verbindungsvorrichtung 79 axial aneinander gehalten sind. Das Drehlager 78 ist durch ein passendes Übergreifen der Hülsenkörper des Griffteils 6 und des Schaftes 7 gebildet. Bei der vorliegenden Ausgestaltung weist das Griffteil 6 einen von seinem hinteren Ende koaxial abstehenden, vorzugsweise verjüngten Hülsenansatz 81 auf, der von einem vorragenden Hülsenmantel 82 des Schaftes 7 mit geringem Bewegungsspiel umgeben ist. Die Verbindungsvorrichtung 79 ist durch eine Verrastungsvorrichtung 83 mit wenigstens einer radialen nach außen gerichteten Verrastungsnase 84 an einen vom Hülsenansatz 81 nach hinten ragenden Verrastungsarm 85 gebildet, wobei die Verrastungsnase 84 eine Verrastungskante an der Innenseite des Hülsenansatzes 82 hintergreift. Rückseitig weist der Verrastungsarm 85 eine konvergente Einführungsfläche 86 auf, die beim Einstecken ein selbsttätiges Einbiegen der elastischen Verrastungsarme 85 bewirkt. Der Hülsenansatz 82 ist in Richtung nach vorne vorzugsweise konvergent bzw. mit einer konischen Mantelfläche 87a versehen, wobei er etwa schließend in die Mantelfläche 87 des Griffteils 6 übergeht. Die Mantelfläche 87 ist zwecks Verbesserung der Griffestigkeit mit einer Griffstruktur versehen. Bei der vorliegenden Ausgestaltung sind in der Längsrichtung einander abwechselnde Ringwellen 88 und Ringvertiefungen vorgesehen, die vorzugsweise gerundet sind und an nur geringfügig geneigten Ringflankenflächen ineinander übergehen. Die weitere Verbesserung der Grifffestigkeit weist die Mantelfläche 87b drei auf den Umfang gleichmäßig verteilt angeordnete Griffflächen 89 auf, die eine vorteilhafte Dreipunkthalterung des Griffteils 6 zwischen drei Fingern der Bedienungshand gestatten, während der Schaft 7 auf dem Mittelhandbereich insbesondere zwischen dem Zeigefinger und dem Daumen aufliegen kann. Die Auflagestelle ergibt sich im Schaft 7 in der Nähe des Anschlußstutzens 12.

Die Drehbarkeit des Griffteils 6 ermöglicht eine Anpassung der Position der Kanüle 27 an die jeweilige Behandlungsstelle. Zum Verdrehen braucht lediglich das Griffteil 6 mit dem es ergreifenden Fingern verdreht zu werden, wobei die Kanüle 27 mitgedreht wird. Dabei liegt der Schaft 7 auf dem Basisbereich zwischen dem Zeigefinger und dem Daumen des Handrückens auf. Aufgrund des Gewichtes der flexiblen Versorgungsleitung kann der Schaft 7 beim Drehen der Griffhülse 6 in seiner jeweiligen Drehstellung verbleiben.

Im Funktionsbetrieb kann gleichzeitig die Behandlungsflüssigkeit in der Zuführungsleitung 11 und Druckluft in der Zuführungsleitung 9 durch die Dreh/Steckkupplung in das Handstück 2 strömen, wobei die Druckluft zunächst nach hinten durch den Ringspalt 66 strömt und aus den Querlöchern 72 vorzugsweise verteilt in den Aufnahmeraum 64 strömt und das darin befindliche abrasive Mittel, z.B. Natriumbicarbonat oder Kaliumsulfat in Pulverform, aufwirbelt. Das so gebildete Luft/Pulvergemisch strömt durch das Eintrittsloch 74 oder beim Vorhandensein einer Scheibe 75 durch die Zugangslöcher 74a und durch das Eintrittsloch 74 in die Innenhülse 34 und weiter zur Auslaßöffnung 5, wo es sich mit dem Wasser vermischt und einen abrasiven Strom zur Entfernung von Belägen an Zähnen und dergleichen bildet. Die vorbeschriebene Zufuhr der Medien kann durch einen geeigneten Schalter ausgelöst werden. Bei der vorliegenden Ausgestaltung ist ein Fußschalter vorgesehen, der elektrisch entsprechende Öffnungsventile einer Steuereinrichtung für die Medien betätigt.

Um den Übergang des abrasiven Materials in den Bereich der Steck/Drehkupplung 13 zu verhindern, ist im Zuführungsleitungsabschnitt 9a ein Rückschlagventil 91 angeordnet, dessen Ventilkörper, vorzugsweise eine Ventilkugel, ein Rückströmen im Zuführungsleitungsabschnitt 11a sperrt. Hierdurch sind andere Handinstrumente 1, z.B. Turbine, die ebenfalls mit der Steck/Drehkupplung 13 ankuppelbar sind, vor Verunreinigung und Beschädigung durch das abrasive Mittel geschützt.

Ohne die vorbeschriebene Sperre könnte das abrasive Material z.B. durch Eigengewicht nach Abschaltung des Handinstruments 1 oder im folgenden Störungsfall in den Bereich der Steck/Drehkupplung 13 gelangen.

Im Falle einer Verstopfung der Luft/Pulvergemischzuführungsleitung, z.B. im Bereich der Kanüle 27 baut sich in den von der Druckluft durchströmten Räumen des Handinstruments 1 der anstehende Luftdruck auf. In diesem Druckzustand ist es ungünstig, die Steck/Drehkupplung 13 oder den Vorratsbehälter 3 zu öffnen, weil beim Öffnen der in den Hohlräumen des Handinstruments 1 befindliche Staudruck ausströmt, was insbesondere beim Vorratsbehälter 8 ungünstig ist, da beim Ausströmen Pulverpartikel mitgerissen werden, was unerwünscht ist.

Vorzugsweise ist das Rückschlagventil 91 im Bereich des Grundes einer vorderseitigen Stufenbohrung 91a angeordnet, in die eine jeweils die Rohrstutzen 17, 18 bildende Hülse mit Abstand zur das Rückschlagventil 91 aufnehmenden Stufe fest eingesetzt ist.

Der Vorratsbehälter 3 weist eine besondere Druckentlastungsvorrichtung 92 auf, die eine Druckentlastung gewährleistet, bevor der Vorratsbehälter 3 geöffnet wird, hier der Deckel 61 abgenommen wird. Die Druckentlastungsvorrichtung 92 weist in der mit dem Dichtungsring 94 zusammenwirkenden Dichtfläche 95 eine Ausnehmung 96 auf, die beim Losschrauben des Deckels 61 einen kleinen Durchgang für die unter Druck stehende Druckluft bildet, durch den diese ausströmen kann, bevor der Deckel aus dem Gewindeeingriff kommt. Bei dieser Druckentlastung findet kaum ein Pulveraustritt statt, und zwar insbesondere dann nicht, wenn der Deckel 61 in einer mit der so gebildeten Austrittsöffnung nach oben weisenden Stellung des Handinstruments geöffnet wird, in der das Pulver sich auf dem Grund des Deckels befindet. Bei der vorliegenden Ausgestaltung ist die Ausnehmung durch eine oder mehrere auf dem Umfang verteilt angeordnete Abflachungen 97 gebildet, die an der runden Mantelfläche 98 eines das Außengewinde aufweisenden Ringansatzes 99 angeordnet sind, der in seinem freien Randbereich mit dem Dichtungsring 94 zusammenwirkt. Die wenigstens eine Abflachung 97 braucht nur im freien Randbereich des Ringansatzes angeordnet zu sein. Sie kann sich jedoch auch über die gesamte Länge des Ringansatzes 99 erstrecken, wobei das Gewinde ebenfalls eine Abflachung aufweist.

Das abrasive Mittel besteht aus einem Material, das sich in Feuchtigkeit bzw. Wasser auflöst, und somit verhältnismäßig leicht von der Behandlungsstelle hier aus den Mundraum des Patienten, wieder auszuspülen ist. Zwecks Geschmacksverbesserung ist es vorteilhaft, dem abrasiven Mittel bzw. Pulver einen angenehmen Geschmacksstoff beizumischen, z.B. Zitronen- oder Orangengeschmack.

Es eignet sich ein Pulver mit einer Korngröße zwischen etwa 15 um und 125 um sehr gut zum Entfernen und Reinigen von Belägen auf Zähnen.

Da der Belag oder die Verschmutzung oder die Verfärbung der Zähne von unterschiedlicher Stärke oder Festigkeit sein können, ist es vorteilhaft, mehrere Arten Pulver mit unterschiedlicher Abtragsfähigkeit bzw. abrasiver Leistungsfähigkeit dem Handinstrument 1 jeweils in einem Vorratsbehälter zuzuordnen. Es ist auch vorteilhaft, Pulver in mehreren unterschiedlichen Korngrößen oder -bereichen, wie grob, mittel und fein oder grob und fein, in Vorratsbehältern bereitzustellen. Im letzteren Fall kann z.B. das Pulver für grobe Arbeiten eine Korngröße von 60 um bis 100 µm aufweisen, während das Pulver für feine Arbeiten eine Korngröße zwischen 15 um und 50 um aufweisen kann. Die letztere Korngröße eignet sich sowohl für feine Arbeiten an empfindlichen Zähnen als auch zur Politur von Zähnen.

Es ist im weiteren vorteilhaft, dem Handinstrument 1 mehrere Kanülen 27 oder Kanülenköpfe 53 zuzuordnen, die alle zur Halterung am Handstück 2 bzw. An der Kanüle 27 passen, jedoch sich bezüglich ihrer Form und/oder Größe oder bezüglich der Größe ihrer Auslaßöffnung 5 unterscheiden. Durch die Auswahl und den Austausch einer bestimmten von unterschiedlichen Kanülen 27 oder Kanülenkappen bzw. -Köpfen 53 unterschiedlicher Formen und/oder Größen läßt sich das Handinstrument auch an schwierigen Behandlungsstellen anpassen. Eine Auswahl unterschiedlich groß gebaute Kanülen 27 oder unterschiedlich großer Auslaßöffnungen 5 ermöglicht es, die Wirksamkeit des an der Auslaßöffnung 5 austretenden Behandlungsstroms zu beeinflussen und somit die Leistungsfähigkeit zu bestimmen, um eine grobe oder mehr feine Arbeit gezielt ausführen zu können. Außerdem eignen sich Kanülen 27 mit einer unterschiedlichen Größe der Auslaßöffnung 5 für Pulver unterschiedlicher Korngröße oder unterschiedlicher Abtragsfähigkeit.

Um unterschiedliche Arten Pulver voneinander unterscheiden zu können, ist es vorteilhaft, die Arten in unterschiedlichen Farben herzustellen. Sofern mehrere unterschiedliche Kanülen 27 oder Kanülenköpfe 53 vorhanden sind, die bestimmten Pulverarten zugeordnet sind, ist es vorteilhaft, die Kanülen oder die Kanülenköpfe mit einer entsprechenden Markierung zu versehen, die die Zugehörigkeit des passenden Pulvers angibt. Vorzugsweise ist diese Markierung eine Farbmarkierung in der gleichen Farbe, die das zugehörige Pulver aufweist.

Es ist außerdem vorteilhaft, dem Handinstrument 1 mehrere unterschiedlich große, hier durch das wenigstens eine Austrittsloch 73 und/oder Eintrittsloch 74 gebildete Ausund/oder Eintrittsdüsen für den Träger-Luftstrom und/oder für das Gemisch aus Luft und abrasivem Mittel zuzuordnen, die je nach gewünschter Korngröße des Pulvers austauschbar sind. Dabei kann vorzugsweise jeweils ein Teilesatz, bestehend aus einer Kanüle 27 und einer Aus- und/oder Eintrittsdüse, hier der hülsenförmige Düsenträger 15, bezüglich der Durchlaßöffnungen aufeinander abgestimmt sein.

Beim vorliegenden Ausführungsbeispiel bestehen das Einsatzteil 20, die Kanüle 21, die Aufnahmehülse 33, das Verbindungsstück 37, das Innen- und Außenrohr 34, 35 und die Hülse 65 sowie gegebenenfalls auch die Scheibe 75 aus insbesondere hartem Metall, vorzugsweise Stahl, wodurch ein früher Verschleiß dieser Teile vermieden wird. Das Griffteil 6 und/oder der Schaft 7 und/oder der Deckel 61 bzw. der Vorratsbehälter 3 bestehen aus Metall, Kunststoff oder vorzugsweise aus Glas. Diese Werkstoffe lassen sich auch bei schwieriger Bauform einfach und kostengünstig herstellen, und sie sind unempfindlich gegen Desinfektions- und Sterilisationsmittel. Außerdem gibt es insbesondere bei Glas keine elektrostatische Aufladung.

Im Betrieb eines vorliegenden Handinstruments 1 besteht die Gefahr, daß Feuchtigkeit und/oder abrasives Material durch kleine Spalten und Fugen im vorderen Bereich des Handstücks 2 in dessen Inneres eindringen, wo sie z.B. die Verbindung 31 für die Kanüle 27 und/oder das Drehlager 78 verunreinigen und beschädigen können. Um dies zu vermeiden, ist der Innenraum 8 des Handstücks 2 durch eine Leitungsverbindung 101 mit der Zuführungsleitung 9 für die Druckluft verbunden. Der Luftdruck kann sich somit in den Innenraum fortpflanzen, wobei er gegebenenfalls auch aus den Spalten oder Fugen austreten kann und das Eindringen der vorgenannten Verschmutzung verhindert. Bei der vorliegenden Ausgestaltung ist der sich nach hinten erstreckende Zuführungs-Leitungsabschnitt nämlich der hintere Teil des Innenraums 8 durch ein Durchgangsloch 102 im Verbindungsteil 37 mit dem vorderen Teil des Innenraumes 8 verbunden. Hierdurch kann aufgrund des Innendrucks weder in den Spalten des Drehlagers 78 noch im Bereich der Verbindungsvorrichtung 31 Schmutz eindringen.

Es ist vorteilhaft, dem abrasiven pulverförmigen Mittel Fluor oder ein fluorhaltiges Mittel, insbesondere ebenfalls in Pulverform, beizumischen. Hierdurch wird erreicht, daß bei der Behandlung Fluor in die Zahnoberfläche eindringt und diese erhärtet und stabilisiert. Aufgrund der Strömungsgeschwindigkeit und des dadurch hervorgerufenen Aufpralls der Fluor enthaltenden Partikel ist die Einwirkung in die Zahnoberfläche besonders wirksam.

## Patentansprüche

1. Medizinisches oder dentales Handinstrument (1) zum Abstrahlen eines abrasiven Behandlungsmittels, mit
a) einem Handstück (2),
b) einem Vorratsbehälter (3) für das abrasive Behandlungsmittel,
c) einem Kupplungsanschluß (4) für ein Transportfluid, insbesondere Wasser oder Luft,
d) und einer dreh- und lösbaren Kanüle (27), die eine Auslaßöffnung (5) für das abrasive Behandlungsmittel und das Transportfluid aufweist,
**dadurch gekennzeichnet,**
e) daß die Kanüle (27) durch einen Bajonettverschluß (31) mit dem Handstück (2) lösbar verbunden ist,
f) daß das Handstück (2) in seinem vorderen Bereich ein die Kanüle (27) tragendes Griffteil (6) aufweist, von dem sich ein Schaft (7) nach hinten erstreckt,
g) und daß das Griffteil (6) und der Schaft (7) relativ zueinander um deren Längsmittelachse (10) frei drehbar aneinander gelagert sind.

2. Handinstrument nach Anspruch 1,
**dadurch gekennzeichnet,**
**daß** das Griffteil (6) einen rückseitigen Hülsenansatz (81) aufweist und der Schaft (7) einen vorderseitigen Hülsenansatz (82) aufweist, wobei die Hülsenansätze (81, 82) einander mit geringem Bewegungsspiel koaxial übergreifen, wobei vorzugsweise der Hülsenansatz (82) des Schaftes (7) den Hülsenansatz (81) des Griffteils (6) übergreift.

3. Handinstrument nach Anspruch 1 oder 2,
**dadurch gekennzeichnet,**
**daß** das Griffteil (6) und der Schaft (7) durch eine Schnellschlußverbindung, vorzugsweise eine Verrastungsvorrichtung (83), aneinander gehalten sind.

4. Handinstrument nach einem der vorherigen Ansprüche,
**dadurch gekennzeichnet,**
**daß** die Kanüle (27) durch den Bajonettverschluß mit dem vorderen Ende des Griffteils (6) verbunden ist.

## Claims

1. Medical or dental hand instrument (1) for spraying an abrasive treatment medium, having
(a) a handpiece (2),
(b) a supply container (3) for the abrasive treatment medium,
(c) a coupling connection (4) for a transport fluid, in particular water or air,
(d) and a rotatable and releasable cannula (27), which has an outlet opening (5) for the abrasive treatment medium and the transport fluid,
**characterised**
(e) in that the cannula (27) is releasably connected with the handpiece (2) by means of a bayonet connection (31),
(f) in that the handpiece (2) has in its forward region a grip part (6) carrying the cannula (27), from which grip part a shaft (7) extends rearwardly,
(g) and in that the grip part (6) and the shaft (7) are mounted on one another freely rotatably relative on one another around their longitudinal middle axis (10).

2. Hand instrument according to claim 1,
**characterised in that**,
the grip part (6) has a rearward sleeve part (81) and the shaft (7) has a forward sleeve part (82), the sleeve parts (81, 82) engaging coaxially one over another with a slight play for movement, preferably the sleeve part (82) of the shaft (7) engaging over the sleeve part (81) of the grip part (6) .

3. Hand instrument according to claim 1 or 2,
**characterised in that**,
the grip part (6) and the shaft (7) are held one to the other by means of a quick-fastening connection, preferably a latching means (83).

4. Hand instrument according to any one of the preceding claims,
**characterised in that**,
the cannula (27) is connected with the front end of the grip part (6) by means of the bayonet connection (31).

## Revendications

1. Instrument manuel médical ou dentaire (1) pour la pulvérisation d'un moyen de traitement abrasif, avec
a) une poignée (2)
b) un réservoir (3) pour le moyen de traitement abrasif,
c) un raccord (4) pour un fluide de transport, notamment de l'eau ou de l'air,
d) et une canule rotative et amovible (27), qui présente une ouverture de sortie (5) pour le moyen de traitement abrasif et le fluide de transport,
**caractérisé en ce que**,
e) la canule (27) est raccordée de façon amovible à la peignée (2) par une fermeture à baïonnette (31),
f) la poignée (2) présente dans sa partie avant un élément de préhension (6) portant la canule (27), élément de préhension à partir duquel s'étend un fût (7) vers l'arrière,
g) l'élément de préhension (6) et le fût (7) sont logés de façon librement rotative entre eux autour de leur axe médian longitudinal (10).

2. Instrument manuel selon la revendication 1,
**caractérisé en ce que**,
l'élément de préhension (6) présente une douille arrière (81) et le fût (7) une douille avant (82), les douilles (81, 82) venant en surplomb l'une par rapport à l'autre coaxialement avec un léger jeu de mouvement, moyennant quoi de préférence la douille (82) du fût (7) vient en surplomb sur la douille (81) de l'élément de préhension (6).

3. Instrument manuel selon la revendication 1 ou 2,
**caractérisé en ce que**,
l'élément de préhension (6) et le fût (7) sont maintenus assemblés par un raccord rapide, de préférence par un dispositif à encliquetage ou à emboîtement (83)

4. Instrument manuel selon une des revendications précédentes,
**caractérisé en ce que**,
la canule (27) est raccordée de façon amovible à sa partie avant d'élément de préhension (6) par la fermeture à baïonnette (31).
